# EUROPEAN PATENT APPLICATION

(11) **EP 4 387 375 A1**
(43) Date of publication of application: **19.06.2024**
(21) Application number: 22863025.7
(22) Date of filing: 05.08.2022
(51) Int. Cl.: H04W 76/11, H04W 76/19

(54) **COMMUNICATION METHOD AND APPARATUS**

(30) Priority: 30.08.2021 CN 202111008458
(71) Applicant: Huawei Technologies Co., Ltd., Shenzhen, Guangdong 518129 (CN)
(72) Inventor: HAO, Jinping, Shenzhen, Guangdong 518129 (CN)
(74) Representative: Isarpatent
(86) International application number: PCT/CN2022/110620
(87) International publication number: WO 2023/029884

(57) **Abstract**

This application discloses a communication method and apparatus. The method includes: A terminal sends indication information to an access network device, where the indication information indicates at least one of the following: positioning, a terminal type, or signaling transmission; and the terminal receives an RRC message from the access network device, where the RRC message is used for configuring an SRB2 for the terminal and not configuring a DRB. If the indication information indicates positioning, the indication information includes positioning, positioning-signaling, a positioning service, positioning service signaling, or the like. If the indication information indicates that the terminal type is a positioning terminal, the indication information includes a positioning-node indication or a positioning indication. If the indication information indicates that the terminal type is a terminal performing signaling transmission, the indication information includes a signaling node indication or a signaling only-node indication. If the indication information indicates signaling transmission, the indication information includes at least one of the following: signaling, signaling-only, or control-signaling. According to solutions of this application, normal communication may be ensured.

## Description

This application claims priority to Chinese Patent Application No. 202111008458.8, filed with the China National Intellectual Property Administration on August 30, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In an existing communication system, a signaling radio bearer (signaling radio bearer, SRB) 2 is used for communicating a non-access stratum (non-access stratum, NAS) message. Establishment of the SRB2 is accompanied with establishment of a data radio bearer (data radio bearer, DRB). In some cases, this may affect normal communication.

### SUMMARY

This application provides a communication method and apparatus, to ensure normal communication.

According to a first aspect, a communication method is provided. The method includes: A terminal sends indication information to an access network device, where the indication information indicates at least one of the following: positioning, a terminal type, or signaling transmission; and the terminal receives a radio resource control (radio resource control, RRC) message from the access network device, where the RRC message is used for configuring an SRB2 for the terminal and not configuring a DRB. In this aspect, the terminal sends the indication information, so that the access network device may clearly learn that there is no need to establish the DRB for the terminal, and determine not to establish the DRB for the terminal. In this way, normal communication may be ensured. The method is particularly applicable to a positioning scenario, and may reduce air interface resources, reduce processing complexity of the terminal, reduce a communication delay, and reduce an effect on a key service performance indicator.

According to a second aspect, a communication method is provided. The method includes: An access network device receives indication information from a terminal, where the indication information indicates at least one of the following: positioning, a terminal type, or signaling transmission; and the access network device sends an RRC message to the terminal, where the RRC message is used for configuring an SRB2 for the terminal and not configuring a DRB. In this aspect, the indication information sent by the terminal is received, so that the access network device may clearly learn that there is no need to establish the DRB for the terminal, and determine not to establish the DRB for the terminal. In this way, normal communication may be ensured. The method is particularly applicable to a positioning scenario, and may reduce air interface resources, reduce a communication delay, and reduce an effect on a key service performance indicator.

With reference to the first aspect or the second aspect, in a possible implementation, when the indication information indicates positioning, the indication information includes at least one of the following: positioning, positioning-signaling, a positioning service, or positioning service signaling. In this implementation, the at least one piece of the indication information may clearly indicate positioning, so that processing efficiency of the access network device is improved.

With reference to the first aspect or the second aspect, in another possible implementation, when the indication information indicates that the terminal type is a positioning terminal, the indication information includes at least one of the following: a positioning-node indication or a positioning indication. In this implementation, the indication information may clearly indicate that the terminal type is the positioning terminal, so that the access network device may determine that there is no need to establish the DRB for the terminal.

With reference to the first aspect or the second aspect, in another possible implementation, when the indication information indicates that the terminal type is a terminal performing signaling transmission, the indication information includes at least one of the following: a signaling node indication or a signaling only-node indication. In this implementation, the indication information may clearly indicate that the terminal type is the terminal performing signaling transmission, so that the access network device may determine that there is no need to establish the DRB for the terminal.

With reference to the first aspect or the second aspect, in another possible implementation, when the indication information indicates signaling transmission, the indication information includes at least one of the following: signaling, signaling-only, or control-signaling. In this implementation, the at least one piece of the indication information may clearly indicate signaling transmission, so that the processing efficiency of the access network device is improved.

With reference to the first aspect or the second aspect, in another possible implementation, the indication information is included in an RRC setup request message, and the indication information is an establishment cause; the indication information is included in an RRC resume request message, and the indication information is a resume cause; the indication information is included in an RRC setup complete message; or the indication information is included in an RRC resume complete message. In this implementation, the indication information is carried in any one of the foregoing messages, to clearly indicate signaling transmission, so that the processing efficiency of the access network device is improved. In addition, there is no need to separately send the indication information, so that signaling overheads are saved.

According to a third aspect, a communication method is provided. The method includes: A terminal receives a second paging message from an access network device, where the second paging message includes second indication information, and the second indication information indicates at least one of the following: positioning or signaling transmission; and the terminal sends a radio resource control RRC message to the access network device, where the RRC message is triggered by the second paging message. In this aspect, when a network triggers the terminal to perform access, it may be indicated in the paging message that the terminal is paged for positioning and/or for signaling transmission, and the terminal is triggered to perform access for positioning and/or for signaling transmission. Therefore, the access network device does not configure a DRB for the terminal, and normal communication may be ensured. The method is particularly applicable to a positioning scenario, and may reduce air interface resources, reduce processing complexity of the terminal, reduce a communication delay, and reduce an effect on a key service performance indicator.

According to a fourth aspect, a communication method is provided. The method includes: An access network device receives a first paging message from an access management function (access management function, AMF) network element, where the first paging message includes first indication information, and the first indication information indicates at least one of the following: positioning or signaling transmission; the access network device sends a second paging message to a terminal based on the first paging message; and the access network device receives an RRC message from the terminal, where the RRC message is triggered by the second paging message. Optionally, the second paging message includes second indication information, where the second indication information indicates at least one of the following: positioning or signaling transmission. In this aspect, based on an indication in the first paging message that paging is performed for positioning/or for signaling transmission, the access network device does not configure a DRB for the terminal, so that normal communication may be ensured. The method is particularly applicable to a positioning scenario, and may reduce air interface resources, reduce a communication delay, and reduce an effect on a key service performance indicator.

According to a fifth aspect, a communication method is provided. The method includes: An access management function (access management function, AMF) network element sends a first paging message to an access network device, where the first paging message includes first indication information, and the first indication information indicates at least one of the following: positioning or signaling transmission; and the access management function network element receives a non-access stratum (non-access stratum, NAS) message from the access network device, where the NAS message is triggered by the first paging message. In this aspect, when a network triggers a terminal to perform access, it may be indicated in the paging message that paging is performed for positioning and/or for signaling transmission, so that the access network device learns that paging is performed for paging and/or for signaling transmission. Therefore, the access network device does not configure a DRB for the terminal, and normal communication may be performed. The method is particularly applicable to a positioning scenario, and may reduce air interface resources, reduce a communication delay, and reduce an effect on a key service performance indicator.

According to a sixth aspect, a communication method is provided. The method includes: A terminal sends indication information to an access network device, where the indication information indicates at least one of the following: positioning, to perform signaling transmission, or a terminal type; and the terminal receives a NAS message from an AMF network element. In this aspect, after accessing a network, the terminal may notify the AMF that the current access is not for service data transmission, so that the AMF determines not to establish a session for the terminal. Therefore, normal communication may be performed. The method is particularly applicable to a positioning scenario, and may reduce signaling resources and reduce a communication delay.

According to a seventh aspect, a communication method is provided. The method includes: An access management function network element receives indication information from a terminal, where the indication information indicates at least one of the following: positioning, to perform signaling transmission, or a terminal type; the access management function network element determines not to establish a session; and the access management function network element sends a NAS message to the terminal. In this aspect, after the terminal accesses a network, the AMF receives from the terminal a notification that the current access is not for service data transmission, so that the AMF determines not to establish the session for the terminal. Therefore, normal communication may be performed. The method is particularly applicable to a positioning scenario, and may reduce signaling resources and reduce a communication delay.

With reference to the sixth aspect or the seventh aspect, in a possible implementation, when the indication information indicates positioning, the indication information includes at least one of the following: registration for positioning, positioning, or a positioning service. In this implementation, the at least one piece of the indication information may clearly indicate positioning, so that processing efficiency of the AMF is improved.

With reference to the sixth aspect or the seventh aspect, in another possible implementation, the indication information is included in a registration request message, and the indication information is a first registration type; or the indication information is included in a control plane service request message, and the indication information is a first control plane service type; or the indication information is included in a service request message, and the indication information is a first service type. In this implementation, the AMF receives the registration request message/control plane service request message/service request message, and obtains a 5G system registration type value in the registration request message. When a registration type/control plane service type/service type is registration or access for positioning, the AMF may clearly determine not to establish the session. Therefore, the signaling resources may be reduced, and the communication delay may be reduced.

With reference to the sixth aspect or the seventh aspect, in another possible implementation, when the indication information indicates signaling transmission, the indication information includes at least one of the following: registration for control-signaling transmission, control-signaling transmission only, control-signaling only, signaling-only, or a signaling service. In this implementation, the at least one piece of the indication information may clearly indicate signaling transmission, so that the processing efficiency of the AMF is improved.

With reference to the sixth aspect or the seventh aspect, in another possible implementation, the indication information is included in a registration request message, and the indication information is a second registration type; or the indication information is included in a control plane service request message, and the indication information is a second control plane service type; or the indication information is included in a service request message, and the indication information is a second service type. In this implementation, the AMF receives the registration request message/control plane service request message/service request message, obtains a 5G system registration type value/control plane service type value/service type value in the registration request message/control plane service request message/service request message. When a registration type/control plane service type/service type is registration or access for control-signaling transmission, the AMF determines not to establish the session. Therefore, the signaling resources may be reduced, and the communication delay may be reduced.

According to an eighth aspect, a communication apparatus is provided, to implement the communication method according to the first aspect. For example, the communication apparatus may be a chip or a terminal. The foregoing method may be implemented by using software, hardware, or by hardware executing corresponding software.

In a possible implementation, the communication apparatus may include a transceiver unit and a processing unit. The transceiver unit is configured to send indication information to an access network device, where the indication information indicates at least one of the following: positioning, a type of the communication apparatus, or signaling transmission. The transceiver unit is further configured to receive an RRC message from the access network device, where the RRC message is used for configuring an SRB2 for the communication apparatus and not configuring a DRB.

According to a ninth aspect, a communication apparatus is provided, to implement the communication method according to the second aspect. For example, the communication apparatus may be a chip or an access network device. The foregoing method may be implemented by using software, hardware, or by hardware executing corresponding software.

In a possible implementation, the communication apparatus may include a transceiver unit and a processing unit. The transceiver unit is configured to receive indication information from a terminal, where the indication information indicates at least one of the following: positioning, a terminal type, or signaling transmission. The transceiver unit is further configured to send an RRC message to the terminal, where the RRC message is used for configuring an SRB2 for the terminal and not configuring a DRB.

According to a tenth aspect, a communication apparatus is provided, to implement the communication method according to the third aspect. For example, the communication apparatus may be a chip or a terminal. The foregoing method may be implemented by using software, hardware, or by hardware executing corresponding software.

In a possible implementation, the communication apparatus may include a transceiver unit and a processing unit. The transceiver unit is configured to receive a second paging message from an access network device, where the second paging message includes second indication information, and the second indication information indicates at least one of the following: positioning or signaling transmission. The transceiver unit is further configured to send an RRC message to the access network device, where the RRC message is triggered by the second paging message.

According to an eleventh aspect, a communication apparatus is provided, to implement the communication method according to the fourth aspect. For example, the communication apparatus may be a chip or an access network device. The foregoing method may be implemented by using software, hardware, or by hardware executing corresponding software.

In a possible implementation, the communication apparatus may include a transceiver unit and a processing unit. The transceiver unit is configured to receive a first paging message from an AMF network element, where the first paging message includes first indication information, and the first indication information indicates at least one of the following: positioning or signaling transmission. The transceiver unit is further configured to send a second paging message to a terminal based on the first paging message. The transceiver unit is further configured to receive an RRC message from the terminal, where the RRC message is triggered by the second paging message.

According to a twelfth aspect, a communication apparatus is provided, to implement the communication method according to the fifth aspect. For example, the communication apparatus may be a chip or an access management function network element. The foregoing method may be implemented by using software, hardware, or by hardware executing corresponding software.

In a possible implementation, the communication apparatus may include a transceiver unit and a processing unit. The transceiver unit is configured to send a first paging message to an access network device, where the first paging message includes first indication information, and the first indication information indicates at least one of the following: positioning or signaling transmission. The transceiver unit is further configured to receive a NAS message from a terminal, where the NAS message is triggered by the first paging message.

According to a thirteenth aspect, a communication apparatus is provided, to implement the communication method according to the sixth aspect. For example, the communication apparatus may be a chip or a terminal. The foregoing method may be implemented by using software, hardware, or by hardware executing corresponding software.

In a possible implementation, the communication apparatus may include a transceiver unit and a processing unit. The transceiver unit is configured to send indication information to an AMF network element, where the indication information indicates at least one of the following: positioning, to perform signaling transmission, or a terminal type. The transceiver unit is further configured to receive a NAS message from the AMF network element.

According to a fourteenth aspect, a communication apparatus is provided, to implement the communication method according to the seventh aspect. For example, the communication apparatus may be a chip or an access management function network element. The foregoing method may be implemented by using software, hardware, or by hardware executing corresponding software.

In a possible implementation, the communication apparatus may include a transceiver unit and a processing unit. The transceiver unit is configured to receive indication information from a terminal, where the indication information indicates at least one of the following: positioning, to perform signaling transmission, or a terminal type. The processing unit is configured to determine not to establish a session. The transceiver unit is further configured to send a NAS message to the terminal.

In a possible implementation, the communication apparatus according to the eighth aspect to the fourteenth aspect includes a processor coupled to a memory, and the processor is configured to support the apparatus in performing a corresponding function in the foregoing communication method. The memory is configured to be coupled to the processor, and the memory stores a program (instructions) and/or data necessary for the apparatus. Optionally, the communication apparatus may further include a communication interface, configured to support communication between the apparatus and another network element. Optionally, the memory may be located inside the communication apparatus, or may be located outside the communication apparatus.

In another possible implementation, the communication apparatus according to the eighth aspect to the fourteenth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, or an input/output interface, and is configured to receive a signal from another communication apparatus other than the communication apparatus and transmit the signal to the processor, or send a signal from the processor to another communication apparatus other than the communication apparatus. When the communication apparatus is the chip, the transceiver apparatus is the transceiver circuit or the input/output interface.

When the communication apparatus according to the eighth aspect to the fourteenth aspect is the chip, a sending unit may be an output unit, for example, an output circuit or a communication interface, and a receiving unit may be an input unit, for example, an input circuit or a communication interface. When the communication apparatus is the terminal, the sending unit may be a transmitter or a transmitter machine, and the receiving unit may be a receiver or a receiver machine.

According to a fifteenth aspect, a computer-readable storage medium is provided. The computer-readable storage medium stores a computer program or instructions. When the computer program is executed or the instructions are executed, the method according to the foregoing aspects is implemented.

According to a sixteenth aspect, a computer program product including instructions is provided. When the instructions are run on a communication apparatus, the communication apparatus is enabled to perform the method according to the foregoing aspects.

According to a seventeenth aspect, a communication system is provided. The communication system includes the communication apparatus according to the eighth aspect and the communication apparatus according to the ninth aspect.

According to an eighteenth aspect, a communication system is provided. The communication system includes the communication apparatus according to the tenth aspect, the communication apparatus according to the eleventh aspect, and the communication apparatus according to the twelfth aspect.

According to a nineteenth aspect, a communication system is provided. The communication system includes the communication apparatus according to the thirteenth aspect and the communication apparatus according to the fourteenth aspect.

### BRIEF DESCRIPTION OF DRAWINGS

FIG. 1 is a schematic architectural diagram of a communication system to which a communication method is applied according to an embodiment of this application;
FIG. 2 is a schematic diagram of a long term evolution positioning protocol stack;
FIG. 3 is a schematic flowchart of a communication method according to an embodiment of this application;
FIG. 4 is a schematic flowchart of initial access according to an embodiment of this application;
FIG. 5 is a schematic flowchart of RRC connection resume according to an embodiment of this application;
FIG. 6 is a schematic flowchart of another communication method according to an embodiment of this application;
FIG. 7 is a schematic flowchart of still another communication method according to an embodiment of this application;
FIG. 8 is a schematic flowchart of a terminal registering with an AMF according to an embodiment of this application;
FIG. 9 is a schematic flowchart of a terminal sending a control plane service request to an AMF according to an embodiment of this application;
FIG. 10 is a schematic flowchart of a terminal sending a service request to an AMF according to an embodiment of this application;
FIG. 11 is a schematic flowchart of yet another communication method according to an embodiment of this application;
FIG. 12 is a schematic structural diagram of a communication apparatus according to an embodiment of this application; and
FIG. 13 is a schematic structural diagram of another communication apparatus according to an embodiment of this application.

### DESCRIPTION OF EMBODIMENTS

The following describes embodiments of this application with reference to the accompanying drawings in embodiments of this application.

Technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD), a 5^{th} generation (5th generation, 5G) system, or new radio (new radio, NR). A 5G mobile communication system in this application includes a non-standalone (non-standalone, NSA) 5G mobile communication system and a standalone (standalone, SA) 5G mobile communication system. The technical solutions of this application may alternatively be applied to a future communication system, for example, a 6^{th} generation mobile communication system. The communication system may alternatively be a public land mobile network (public land mobile network, PLMN) network, a device-to-device (device-to-device, D2D) communication system, a machine-to-machine (machine to machine, M2M) communication system, an internet of things (Internet of Things, IoT), an internet of vehicles communication system, or another communication system.

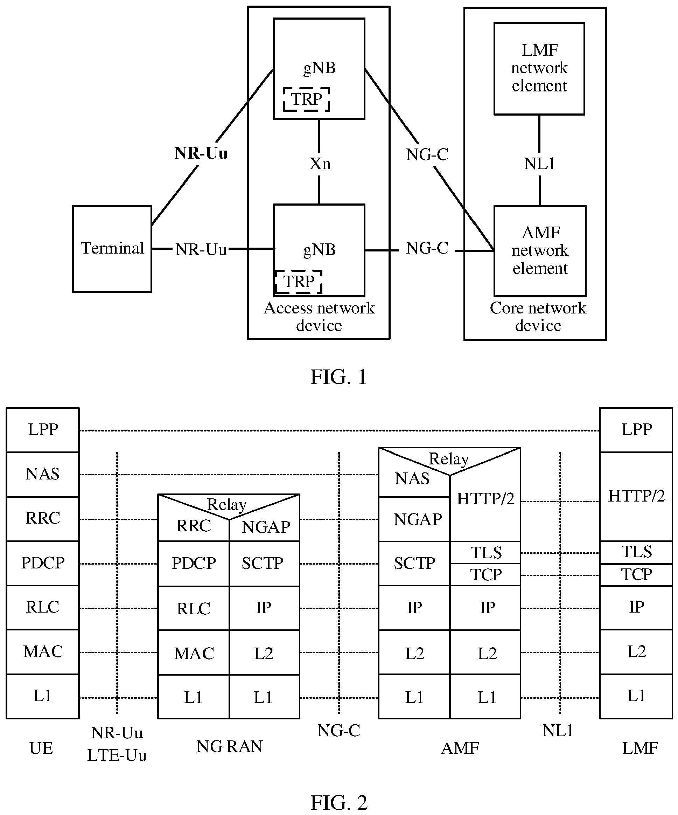

For example, FIG. 1 is a schematic architectural diagram of a communication system that is in a 5G mobile communication system and to which a communication method is applied according to an embodiment of this application. As shown in FIG. 1, in the communication system, a terminal may communicate with an access network device through an air interface. The terminal may further communicate with a core network device by using the access network device. The following uses an example in which the access network device includes a next generation NodeB (next-generation node B, gNB), and the core network device includes an AMF network element and a positioning management function (location management function, LMF) network element for description. The terminal may be connected to the next generation NodeB (next-generation node B, gNB) through a first interface (for example, an NR-Uu interface). The gNB is connected to the AMF network element through a second interface (for example, an NG-C interface). The access network (next) device may include one or more gNBs (FIG. 1 uses two gNBs as an example for description). The gNB is a 5G base station that accesses a 5G core network. The AMF network element is configured to implement a function such as access management, and the LMF network element is configured to implement a function such as positioning or positioning assistance. The AMF network element is connected to the LMF network element through a third interface (for example, an NL1 interface). A node (node) in this application may be a device in the communication system, for example, may be the access network device, the terminal, or a network element in the core network device.

It should be understood that the devices or function nodes included in the communication system in FIG. 1 are merely an example for description, and do not constitute a limitation on this embodiment of this application. Actually, the communication system in FIG. 1 may further include another network element, device, or function node that has an interaction relationship with the devices or function nodes shown in FIG. 1. This is not specifically limited herein.

Optionally, the terminal in this embodiment of this application may be an access terminal, a subscriber unit, a subscriber station, a mobile station, a mobile station, a relay station, a remote station, a remote terminal, a mobile device, a user terminal (user terminal), user equipment (user equipment, UE), a terminal (terminal), a wireless communication device, a user agent, a user apparatus, a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a future 5G network, a terminal in a future evolved PLMN, a terminal in a future internet of vehicles, or the like. This is not limited in this embodiment of this application.

By way of example but not limitation, in this embodiment of this application, the terminal may be a mobile phone, a tablet computer, a computer having wireless receiving and sending functions, a virtual reality terminal, an augmented reality terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, or the like.

By way of example but not limitation, in this embodiment of this application, the wearable device may also be referred to as a wearable intelligent device, and is a generic term of a wearable device developed by intelligently designing daily wear through a wearable technology, such as glasses, gloves, watches, clothing, and shoes. The wearable device is a portable device that is directly worn on a body or integrated into clothes or an accessory of a user. The wearable device is not only a hardware device, but also implements a powerful function through software support, data exchange, and cloud interaction. In a broad sense, the wearable intelligent device includes full-function and large-size devices that can implement complete or partial functions without depending on a smartphone, for example, a smartwatch or smart glasses, and devices that focuses on only a type of application function and needs to be used with another device such as a smartphone, for example, various smart bands and smart jewelry for monitoring physical symptoms.

In addition, in this embodiment of this application, the terminal may alternatively be a terminal in the internet of things (internet of things, IoT) system. The IoT is an important part of future information technology development, and a main technical feature of the IoT is connecting objects to a network by using a communication technology, to implement an intelligent network in which humans and computers are interconnected and things are interconnected. In this embodiment of this application, an IoT technology may implement massive connections, deep coverage, and terminal power saving through for example, a narrow band (narrow band, NB) technology.

In addition, in this embodiment of this application, the terminal may further include a sensor such as an intelligent printer, a train detector, and a gas station. Main functions of the sensor include collecting data (for some terminals), receiving control information and downlink data of the access network device, and sending an electromagnetic wave to transmit uplink data to the access network device.

Optionally, the access network device in this embodiment of this application may be any communication device that is configured to communicate with the terminal and that has wireless receiving and sending functions. The access network device includes but is not limited to an evolved NodeB (evolved node B, eNB), a baseband unit (baseband unit, BBU), an access point (access point, AP) in a wireless fidelity (wireless fidelity, WIFI) system, a wireless relay node, a wireless backhaul node, a transmission point (transmission point, TP), a transmission reception point (transmission reception point, TRP), or the like. The access network device may alternatively be a gNB, a TRP, or a TP in the 5G system, or one antenna panel or a group of antenna panels (including a plurality of antenna panels) of a base station in the 5G system. In addition, the access network device may alternatively be a network node that constitutes the gNB or the TP, for example, a BBU or a distributed unit (distributed unit, DU).

In some deployments, a gNB may include a central unit (central unit, CU) and a DU. In addition, the gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical layer (physical layer, PHY). The AAU implements some physical layer processing functions, radio frequency processing, and a function related to an active antenna. Information at the RRC layer is eventually converted into information at the PHY layer, or is converted from information at the PHY layer. Therefore, in such an architecture, higher layer signaling such as RRC layer signaling may also be considered as being sent by the DU or sent by the DU and the AAU. It may be understood that the access network device may be a device including one or more of a CU node, a DU node, and an AAU node.

Optionally, in this embodiment of this application, communication between the access network device and the terminal may be performed by using a licensed spectrum, may be performed by using an unlicensed spectrum, or may be performed by using both a licensed spectrum and an unlicensed spectrum. Communication between the access network device and the terminal may be performed by using a spectrum below 6 gigahertz (gigahertz, GHz), may be performed by using a spectrum above 6 GHz, or may be performed by using both a spectrum below 6 GHz and a spectrum above 6 GHz. Spectrum resources used between the access network device and the terminal are not limited in this embodiment of this application.

Optionally, the terminal and the access network device in this embodiment of this application may be deployed on land, including indoor, outdoor, handheld, or vehicle-mounted devices; may be deployed on the water; or may be deployed on airplanes, balloons and satellites in the air. Application scenarios of the terminal and the access network device are not limited in this embodiment of this application.

Concepts of an SRB and a DRB in this application are described.

When initially accessing a network, a 5^{th} generation (5^{th} generation, 5G) mobile communication terminal separately establishes a control plane signaling connection and a data plane signaling connection to an access network device and a core network. Message signaling bearers between the terminal and the access network device include the SRB and the DRB. The SRB is defined as a control plane data radio bearer that is for communicating a radio resource control (radio resource control, RRC) message and a non-access stratum (non-access stratum, NAS) message. The DRB is a radio bearer that is for communicating user plane data.

The SRB may be further classified into an SRB0, an SRB1, an SRB2, and an SRB3.

The SRB 0 is used for communicating an RRC message over a common control channel (common control channel, CCCH). The CCCH is the common control channel, and is used for communicating control information when there is no RRC connection between the terminal and the network.

The SRB1 is used for communicating an RRC message and a NAS message used before the SRB2 is established. These messages are communicated over a dedicated control channel (dedicated control channel, DCCH). The DCCH channel is the dedicated control channel, and is a bidirectional channel used for point-to-point transmission of dedicated control information when there is an RRC connection between the terminal and the network.

The SRB2 is used for communicating a NAS message and an RRC message. These messages are communicated over the DCCH channel.

The SRB3 is used for communicating an RRC message used during dual connectivity. These messages are communicated over the DCCH channel.

### Positioning-signaling transmission

A positioning service relates to signaling interaction between the terminal and the access network device, signaling interaction between the terminal and an AMF network element, signaling interaction between the terminal and an LMF network element, and signaling interaction between the access network device and the LMF. A protocol interface between the terminal and the LMF is the long term evolution positioning protocol (LTE positioning protocol, LPP). An LPP message between the terminal and the LMF is carried in a NAS message, and a protocol stack is shown in FIG. 2. Therefore, the positioning service needs the terminal to access a network and establish an SRB2.

However, in an existing 3GPP standard protocol, establishment of the SRB2 is accompanied with establishment of a DRB. For a terminal that performs a service (for example, positioning), there is no data transmission requirement, and the establishment of the DRB causes a signaling delay and a waste of air interface signaling resources. Consequently, the establishment of the DRB is meaningless to the terminal, causes the delay, and affects a performance indicator of the service.

Therefore, embodiments of this application provide a communication solution. A terminal sends indication information to an access network device, so that the access network device may clearly learn that there is no need to establish a DRB for the terminal, and determine not to establish the DRB for the terminal. In this way, normal communication may be ensured. The method is particularly applicable to a positioning scenario, and may reduce air interface resources, reduce processing complexity of the terminal, reduce a communication delay, and reduce an effect on a key service performance indicator.

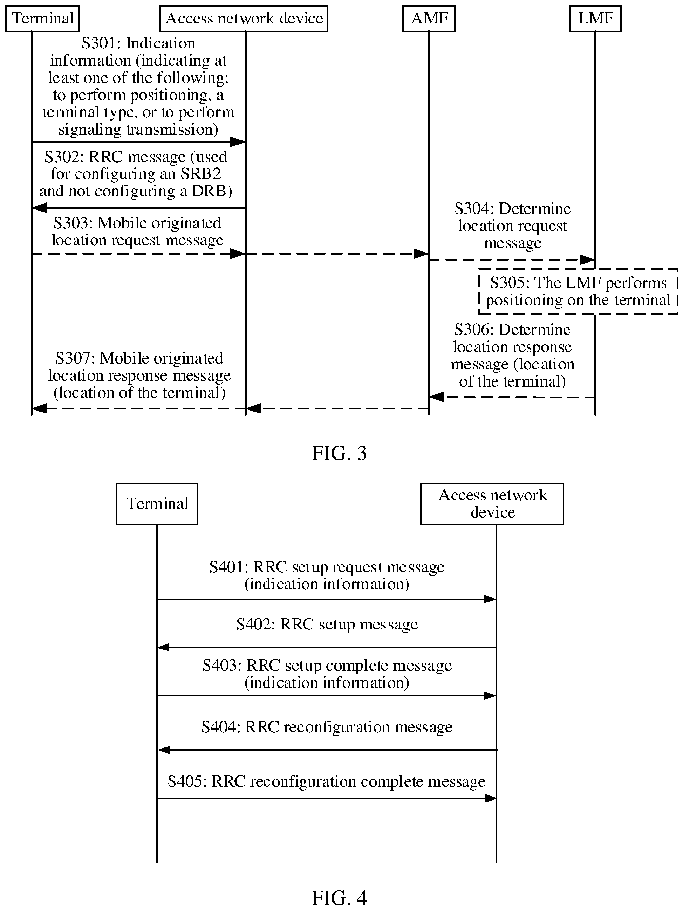

FIG. 3 is a schematic flowchart of a communication method according to an embodiment of this application. The method may include the following steps.

S301: A terminal sends indication information to an access network device.

The terminal sends the indication information to the access network device. The indication information indicates at least one of the following: positioning, a terminal type, or signaling transmission. Optionally, the indication information may be a direct indication or an indirect indication. The terminal notifies, by using the indication information, the access network device that there is a control-signaling transmission requirement and no data transmission requirement between the terminal and the access network device.

When the indication information indicates at least one of the following: positioning or signaling transmission, that there is no data transmission requirement may mean that there is no data transmission during current access of the terminal or there is always no data transmission.

When the indication information indicates the terminal type, that there is no data transmission requirement may mean that there is always no data transmission.

S302: The access network device sends an RRC message to the terminal.

After receiving the indication information, the access network device determines that the terminal subsequently has no data transmission requirement, and chooses to configure an SRB2 but not to configure a DRB. Therefore, the access network device sends the RRC message to the terminal. The RRC message is used for configuring the SRB2 for the terminal and not configuring the DRB.

Optionally, when the communication method is applied to a positioning scenario, the method may further include the following steps (where the steps are represented by dashed lines in FIG. 3).

S303: The terminal sends a mobile originated location request (Mobile Originated Location Request) message to an AMF via the access network device.

The terminal may send the mobile originated location request message to the AMF by using the SRB2.

S304: The AMF sends a determine location request (Determine Location Request) message to an LMF.

After receiving the request from the terminal, the AMF may send the determine location request message to the LMF, to request a location of the terminal.

S305: The LMF performs positioning on the terminal.

S306: The LMF sends a determine location response (Determine location response) message to the AMF, where the message includes the location of the terminal.

After performing positioning on the terminal, the LMF sends the determine location response message to the AMF, to return the location of the terminal to the AMF.

S307: The AMF sends a mobile originated location response (Mobile Originated Location Response) message to the terminal via the access network device, where the message includes the location of the terminal.

After obtaining the location of the terminal, the AMF returns the location to the terminal by using the mobile originated location response message.

Alternatively, after the terminal accesses a network, the AMF may send a determine location request message to the LMF, to request a location of the terminal. That is, step S303 may not be included. Then, the LMF performs positioning on the terminal, and sends a determine location response message to the AMF, to return a location result to the AMF.

Step S301, to be specific, how the terminal sends the indication information, may be implemented in the following plurality of manners.

In an implementation, FIG. 4 is a schematic flowchart of initial access according to an embodiment of this application. The flowchart includes the following steps.

S401: The terminal sends an RRC setup request (RRCSetupRequest) message to the access network device.

For example, a terminal in a radio resource control idle (RRC-IDLE) state sends an RRC setup request message to the access network device.

The RRC setup request message may include the indication information.

When the indication information indicates positioning, the indication information includes at least one of the following: positioning (positioning), positioning-signaling (positioning-signaling), positioning service (location service), or positioning service signaling (location-signaling). The indication information may alternatively be other information that indicates positioning. This is not limited in this application. For example, the indication information is an establishment cause, and may be referred to as a first establishment cause herein. Certainly, the indication information is not limited to a cause. The indication information may alternatively be an information element, a message type, or other information used for indication.

Alternatively, when the indication information indicates signaling transmission, the indication information includes at least one of the following: signaling (signaling), signalingonly (signaling-only), or control-signaling (control-signaling). The indication information may alternatively be other information that indicates signaling transmission. This is not limited in this application. For example, the indication information is an establishment cause, and may be referred to as a second establishment cause herein. Certainly, the indication information is not limited to a cause. The indication information may alternatively be an information element, a message type, or other information used for indication.

For example, the RRC setup request message may include an establishment cause (establishmentCause) information element (information element, IE). A value of the information element may include any one of the foregoing establishment causes.

S402: The access network device sends an RRC setup message to the terminal.

After receiving the RRC setup request message, the access network device sends the RRC setup message to the terminal.

The RRC setup request message and the RRC setup message are sent by using an SRB0.

The terminal receives the RRC setup message sent by the access network device, and establishes an SRB1. In this case, the terminal enters an RRC connected (RRC connected) state.

S403: The terminal sends an RRC setup complete (RRCSetupComplete) message to the access network device.

The terminal sends the RRC setup complete message to the access network device by using the SRB1. The message carries an initial NAS message, where the initial NAS message is used for establishing a NAS connection. Before the SRB2 is established, a subsequent NAS message may be sent by using the SRB1.

Optionally, step S404 may be further performed after step S403.

S404: The access network device sends an RRC reconfiguration (RRCReconfiguration) message to the terminal.

After receiving the indication information in the RRC setup request message, or parsing the establishment cause in the RRC setup request message, the access network device determines that the terminal initiates the RRC setup request and has no data transmission requirement, and then the access network device chooses to configure the SRB2 and not to configure the DRB. The access network device sends the RRC reconfiguration message to the terminal, where the RRC reconfiguration message is used for configuring the SRB2 for the terminal and not configuring the DRB.

The terminal receives the RRC reconfiguration message, and establishes the SRB2. Step 404 may be considered as an example of step S302 in the embodiment shown in FIG. 3.

S405: The terminal sends an RRC reconfiguration complete (RRCReconfigurationComplete) message to the access network device.

In this case, the terminal completes the establishment of the SRB2, and the subsequent NAS message is sent by using the SRB2.

Optionally, in another implementation, after receiving the indication information in the RRC setup request message, or parsing the establishment cause in the RRC setup request message, the access network device may alternatively determine not to configure the SRB2 and the DRB. In other words, the RRC reconfiguration message is used for not configuring the SRB2 or the DRB. A NAS message sent by the terminal to the network, for example, a NAS message that carries an LPP message, is sent by using the SRB1.

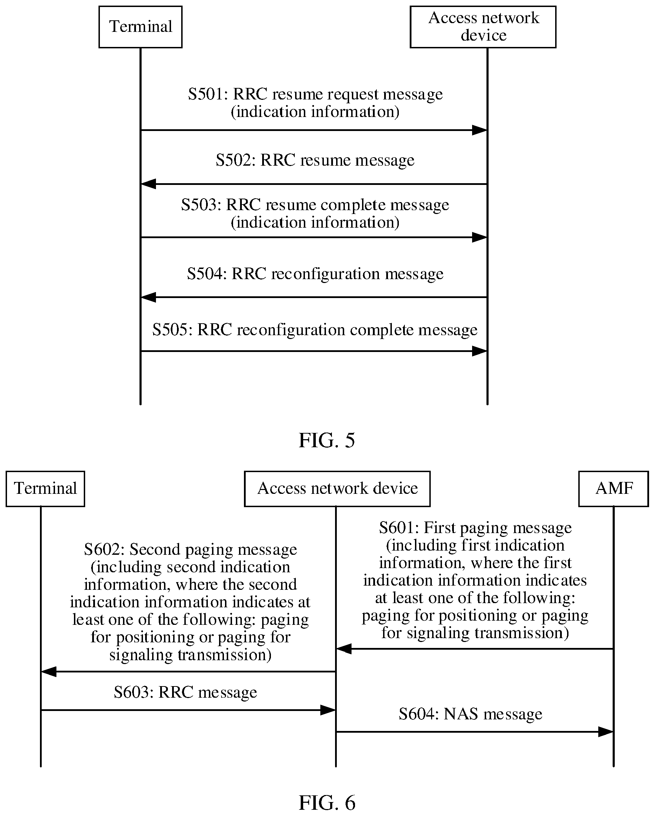

In another implementation, FIG. 5 is a schematic flowchart of RRC connection resume according to an embodiment of this application. For a terminal in an RRC inactive (RRC inactive) state, the terminal enters a connected state by resuming an RRC connection. The method may include the following steps.

S501: The terminal sends an RRC resume request (RRC Resume Request) message to the access network device.

For example, the terminal is in the RRC inactive state, and sends the RRC resume request message to the access network device on an SRB0.

The RRC resume request message may include the foregoing indication information.

When the indication information indicates positioning, the indication information includes at least one of the following: positioning (positioning), positioning-signaling (positioning-signaling), positioning service (location service), or positioning service signaling (location-signaling). The indication information may alternatively be other information that indicates positioning. This is not limited in this application. For example, the indication information is a first resume cause (resumeCause). The indication information may alternatively be an information element, a message type, or other information used for indication.

Alternatively, when the indication information indicates signaling transmission, the indication information includes at least one of the following: signaling (signaling), signalingonly (signaling-only), or control-signaling (control-signaling). The indication information may alternatively be other information that indicates signaling transmission. This is not limited in this application. For example, the indication information is a second resume cause. The indication information may alternatively be an information element, a message type, or other information used for indication.

For example, the RRC resume request message may include a resume cause information element, and a value of the information element includes any one of the foregoing resume causes.

S502: The access network device sends an RRC resume (RRC Resume) message to the terminal.

After receiving the RRC resume request message, the access network device resumes an SRB1 of the terminal, and sends the RRC resume message to the terminal by using the SRB1.

S503: The terminal sends an RRC resume complete (RRC Resume Complete) message to the access network device.

After receiving the RRC resume message, the terminal enters the connected state, and sends the RRC resume complete message to the access network device.

Optionally, step S504 may be further performed after step S503.

S504: The access network device sends an RRC reconfiguration (RRCReconfiguration) message to the terminal.

After receiving the indication information in the RRC resume request message, or parsing the resume cause in the RRC resume request message, the access network device determines that the terminal initiates the RRC resume request and has no data transmission requirement. In this case, the access network device chooses to resume or configure an SRB2 and not to resume or configure a DRB. The access network device sends the RRC reconfiguration message to the terminal, where the RRC reconfiguration message is used for resuming or establishing the SRB2 for the terminal and not resuming or configuring the DRB.

Optionally, that the access network device does not resume or configure the DRB may be that the access network device does not resume or does not establish the DRB for the terminal; or the access network device has established the DRB for the terminal, and after receiving the RRC resume complete message, the access network device releases the DRB by using the RRC reconfiguration message.

The terminal receives the RRC reconfiguration message, and resumes or establishes the SRB2.

Step S504 may be considered as an example of step S302 in the embodiment shown in FIG. 3.

S505: The terminal sends an RRC reconfiguration complete (RRCReconfigurationComplete) message to the access network device.

In this case, the terminal completes the resume or establishment of the SRB2, and a subsequent NAS message is sent by using the SRB2.

Optionally, in another implementation, after receiving the indication information in the RRC resume request message, or parsing the resume cause in the RRC resume request message, the access network device may alternatively determine not to resume or not to configure the SRB2 and the DRB. In other words, the RRC reconfiguration message is used for not resuming or not configuring the SRB2 and the DRB. Alternatively, when the access network device has established the SRB2 and/or the DRB for the terminal, the RRC reconfiguration message is used for releasing the SRB2 and/or the DRB. A NAS message sent by the terminal to the network, for example, a NAS message that carries an LPP message, is sent by using the SRB1.

Still refer to FIG. 4. In still another implementation, a difference from the foregoing implementation is that an RRC setup request message is not changed. In other words, the RRC setup request message does not include the indication information. The indication information is included in an RRC setup complete message. For information indicated by the indication information, refer to the descriptions of the foregoing implementations.

After receiving the indication information in the RRC setup complete message, the access network device determines that the initial access does not include a data transmission requirement, and the access network device may choose to configure the SRB2 for the terminal and not to configure the DRB. The access network device sends an RRC reconfiguration message to the terminal, where the RRC reconfiguration message is used for configuring the SRB2 for the terminal and not configuring the DRB. The terminal receives the RRC reconfiguration message, and establishes the SRB2. In this case, the terminal completes the establishment of the SRB2, and a subsequent NAS message is sent by using the SRB2.

Optionally, in another implementation, after receiving the indication information in the RRC setup complete message, the access network device may alternatively determine not to configure the SRB2 and the DRB. In other words, the RRC reconfiguration message is used for not configuring the SRB2 or the DRB. A NAS message sent by the terminal to the network, for example, a NAS message that carries an LPP message, is sent by using an SRB1.

Still refer to FIG. 4. In yet another implementation, the indication information is included in an RRC setup request message or an RRC setup complete message. When the indication information indicates that the terminal type is a positioning terminal, the indication information includes at least one of the following: a positioning-node indication (pos-NodeIndication) or a positioning indication (pos-Indication). The indication information may alternatively be other information that indicates that the terminal type is a positioning terminal. This is not limited in this application. Alternatively, when the indication information indicates that the terminal type is a terminal performing signaling transmission, the indication information includes at least one of the following: a signaling node indication, or a signaling only-node indication (signalingOnly-NodeIndication). The indication information may alternatively be other information that indicates that the terminal type is a terminal performing signaling transmission. This is not limited in this application. Alternatively, the indication information may indicate another terminal type. In this case, the indication information may be, for example, a reduced capability (reduced capability, redcap) node, a reduced capability positioning node, or a low power high accuracy positioning (low power high accuracy positioning, LPHAP) node. This is not limited in this application. The node herein may be understood as the terminal.

After receiving the indication information in the RRC setup request message or the RRC setup complete message, the access network device determines that the initial access does not include a data transmission requirement, and the access network device may choose and determine to configure the SRB2 for the terminal and not to configure the DRB. The access network device sends the RRC reconfiguration message to the terminal, where the RRC reconfiguration message is used for configuring the SRB2 for the terminal and not configuring the DRB. The terminal receives the RRC reconfiguration message, and establishes the SRB2. In this case, the terminal completes the establishment of the SRB2, and a subsequent NAS message is sent by using the SRB2.

Optionally, in another implementation, after receiving the indication information of the terminal type in the RRC setup request message or the RRC setup complete message, the access network device may determine not to configure the SRB2 and the DRB. In other words, the RRC reconfiguration message is used for not configuring the SRB2 or the DRB. A NAS message sent by the terminal to the network, for example, a NAS message that carries an LPP message, is sent by using an SRB1.

Still refer to FIG. 5. In still yet another implementation, a difference from the foregoing implementation is that an RRC resume request message is not changed. In other words, the RRC resume request message does not include the indication information. The indication information is included in an RRC resume complete message. For content indicated by the indication information, refer to the foregoing descriptions.

After receiving the indication information in the RRC resume complete message, the access network device determines that the terminal initiates RRC resume and has no data transmission requirement. In this case, the access network device chooses to resume or configure the SRB2 and not to resume or configure the DRB. The access network device sends an RRC reconfiguration message to the terminal, where the RRC reconfiguration message is used for resuming or establishing the SRB2 for the terminal and not resuming or configuring the DRB.

Optionally, that the access network device does not resume or configure the DRB may be that the access network device does not resume or does not establish the DRB for the terminal; or the access network device has established the DRB for the terminal, and after receiving the RRC resume complete message, the access network device releases the DRB by using the RRC reconfiguration message.

The terminal receives the RRC reconfiguration message, and resumes or establishes the SRB2. In this case, the terminal completes the resume or establishment of the SRB2, and a subsequent NAS message is sent by using the SRB2.

Optionally, in another implementation, after receiving the indication information in the RRC resume complete message, the access network device may determine not to resume or not to configure the SRB2 and the DRB. In other words, in the RRC reconfiguration message, the SRB2 and the DRB are not resumed or not configured. Alternatively, when the access network device has established the SRB2 and/or the DRB for the terminal, the access network device releases the SRB2 and/or the DRB for the terminal by using the RRC reconfiguration message. A NAS message sent by the terminal to the network, for example, a NAS message that carries an LPP message, is sent by using the SRB1.

According to the communication method provided in this embodiment of this application, the terminal sends the indication information, so that the access network device may clearly learn that there is no need to establish the DRB for the terminal, and determine not to establish the DRB for the terminal. In this way, normal communication may be ensured. The method is particularly applicable to the positioning scenario, and may reduce air interface resources, reduce processing complexity of the terminal, reduce a communication delay, and reduce an effect on a key service performance indicator (for example, for a terminal that performs positioning or whose positioning terminal type is positioning-dedicated, an access network device chooses to establish an SRB2 for the terminal, and does not configure a DRB, so that a communication delay may be reduced, and an effect on a positioning service performance indicator may be reduced).

In descriptions of the foregoing embodiment, when the terminal initiates access or initiates connection resume, the indication information indicates that the terminal currently has no data transmission requirement. In the following embodiment, a network triggers a terminal to perform access.

FIG. 6 is a schematic flowchart of another communication method according to an embodiment of this application. The method may include the following steps.

S601: An AMF sends a first paging (paging) message to an access network device.

A terminal is in idle state, and a network triggers the terminal to access the network. For example, the AMF sends the first paging message to the access network device. The access network device receives the first paging message. The first paging message includes first indication information, where the first indication information indicates at least one of the following: positioning or signaling transmission. In other words, that the network triggers the terminal to access the network is for positioning or signaling transmission.

For example, the first paging message may include at least one of the following information elements: paging for positioning (paging for positioning), paging for signaling (paging for signaling), paging for signaling only (paging for signaling only), or a paging purpose (paging purpose), where a value of the paging purpose may be positioning (pos/positioning), signaling (signaling), or the like. Alternatively, the first paging message may include another information element that indicates paging for positioning or paging for signaling transmission. This is not limited herein. For example, an assistance data for paging information element in a paging message may include the paging for positioning information element.

S602: After receiving the first paging message, the access network device sends a second paging message to the terminal.

After receiving the first paging message, the access network device determines that the AMF sends the first paging message for positioning/or for signaling transmission. Therefore, the access network device sends the second paging message. Specifically, after receiving the first paging message, the access network device parses the first paging message to obtain the indication information in the first paging message, and generates the second paging message. Optionally, the second paging message includes second indication information, where the second indication information indicates at least one of the following: positioning or signaling transmission. Content of the second indication information may be the same as that of the first indication information.

For example, the second paging message may include at least one of the following information elements: paging for positioning, or paging for pos; or paging for signaling, or paging for signaling only. Alternatively, the second paging message may include another information element that indicates paging for positioning or paging for signaling transmission. This is not limited herein.

For example, the second paging message may include an information element: a paging purpose, and a value of the information element is: pos/positioning/signaling, or the like. This indicates that the value may be pos, positioning, or signaling.

S603: The terminal sends an RRC message to the access network device.

After receiving the second paging message, the terminal may learn that the network pages and triggers the terminal to access the network for positioning/or for signaling transmission, and/or pages the terminal for signaling transmission. There are two implementations for the terminal.

In an implementation, in a procedure of subsequently initiating access by the terminal, the terminal sends an RRC setup request message to the access network device, where the message is triggered by the second paging message. The RRC setup request message includes indication information, where the indication formation indicates at least one of the following: positioning, a terminal type, or signaling transmission. In this case, the access network device chooses to configure an SRB2 for the terminal, and not to configure a DRB for the terminal, or not to configure an SRB2 and a DRB for the terminal. The indication information may be specifically an establishment cause, an information element, an indication, or the like. Alternatively, the indication information is included in an RRC setup complete message. For details, refer to the methods shown in FIG. 3 and FIG. 4. Details are not described herein again.

In another implementation, the terminal does not perform additional processing. In other words, an RRC setup request message and an RRC setup complete message do not include the foregoing indication information, and the access network device determines to configure an SRB2 for the terminal, and not to configure a DRB for the terminal. Therefore, the terminal sends the RRC setup request message to the access network device, where the message is triggered by the second paging message. After receiving the RRC setup request message from the terminal, the access network device determines, based on the first indication information, not to establish the DRB for the terminal, or not to configure the SRB2 and the DRB for the terminal. The access network device sends an RRC setup message to the terminal. The terminal sends the RRC setup complete message to the access network device. The RRC setup complete message includes a NAS message. Optionally, in this implementation, the second paging message may not include the second indication information.

In another implementation, in a procedure of subsequently initiating access by the terminal, the terminal sends an RRC resume request message to the access network device, where the message is triggered by the second paging message. The RRC resume request message includes indication information, where the indication formation indicates at least one of the following: positioning, a terminal type, or signaling transmission. In this case, the network chooses to resume or configure an SRB2 for the terminal and not to resume or configure a DRB for the terminal, or not to resume or configure an SRB2 and a DRB for the terminal. The indication information may be specifically an establishment cause, an information element, an indication, or the like. Alternatively, the indication information is included in an RRC resume complete message. For details, refer to the methods shown in FIG. 3 and FIG. 5. Details are not described herein again.

In still another implementation, the terminal does not perform additional processing. In other words, an RRC resume request message and an RRC resume complete message do not include the foregoing indication information, and the network determines to resume or configure an SRB2 for the terminal, and not to resume or configure a DRB for the terminal. Therefore, the terminal sends the RRC resume request message to the access network device, where the message is triggered by the second paging message. After receiving the RRC resume request message from the terminal, the access network device determines, based on the first indication information, not to resume or establish the DRB for the terminal, or not to resume or configure the SRB2 and the DRB for the terminal. The access network device sends an RRC resume message to the terminal. The terminal sends the RRC resume complete message to the access network device. The RRC resume complete message includes a NAS message. Optionally, in this implementation, the second paging message may not include the second indication information.

S604: After receiving the RRC message from the terminal, the access network device forwards the NAS message included in the RRC message to the AMF. The NAS message is triggered by the first paging message.

In an example, the access network device receives the RRC setup complete message sent by the terminal. The RRC setup complete message includes the NAS message. The access network device obtains the NAS message in the RRC setup complete message, and forwards the NAS message to the AMF. The AMF receives the NAS message.

In another example, the access network device receives the RRC resume complete message sent by the terminal. The RRC resume complete message includes the NAS message. The access network device obtains the NAS message in the RRC resume complete message, and forwards the NAS message to the AMF. The AMF receives the NAS message.

For example, the NAS message may be a service request (service request) message or a control plane service request (control plane service request) message.

For example, after receiving the NAS message, the AMF determines that the terminal performs access. In this case, the AMF may send a determine location request (Determine Location Request) message to an LMF, to request a location of UE. Then, the LMF performs positioning on the terminal and returns a location result to the AMF by using a determine location response (Determine Location Response) message.

According to the communication method provided in this embodiment of this application, when the network triggers the terminal to perform access, it may be indicated in the paging message that paging is performed for positioning and/or paging is performed for signaling transmission. Therefore, the DRB is not configured for the terminal, and normal communication may be ensured. The method is particularly applicable to a positioning scenario, and may reduce air interface resources, reduce processing complexity of the terminal, reduce a communication delay, and reduce an effect on a key service performance indicator.

On a core network side, an AMF establishes a packet data unit (packet data unit, PDU) session for a terminal that performs initial access. For a terminal having no data transmission requirement, establishing a PDU session for the terminal causes a signaling delay and a waste of network signaling resources.

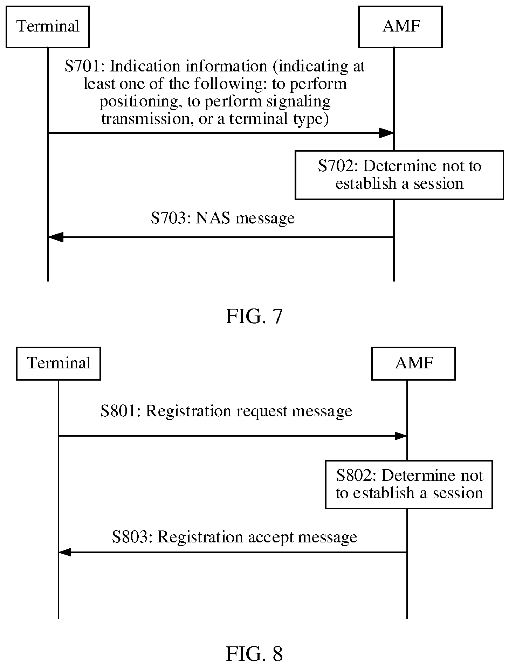

FIG. 7 is a schematic flowchart of still another communication method according to an embodiment of this application. The method may include the following steps.

S701: A terminal sends indication information to an AMF.

The terminal sends the indication information to the AMF. The indication information indicates at least one of the following: positioning, to perform signaling transmission, or a terminal type. The indication information is carried in a NAS message.

For example, when the indication information indicates positioning, the indication information includes at least one of the following: registration for positioning (registration for positioning), positioning (positioning), or a positioning service (positioning service). The indication information may alternatively be other information that can indicate positioning. This is not limited in this application.

When the indication information indicates signaling transmission, the indication information includes at least one of the following: registration for control-signaling transmission (registration for signaling), control-signaling transmission only (signaling only), control-signaling only, signaling-only, or a signaling service (signaling service). The indication information may alternatively be other information that can indicate signaling transmission. This is not limited in this application.

When the indication information indicates that the terminal type is a positioning terminal, the indication information includes at least one of the following: a positioning-node indication (pos-NodeIndication) or a positioning indication (pos-Indication). The indication information may alternatively be other information that can indicate that the terminal type is a positioning terminal. This is not limited in this application. The node herein may be understood as the terminal.

When the indication information indicates that the terminal type is a terminal performing signaling transmission, the indication information includes at least one of the following: a signaling node indication, or a signaling only-node indication (signalingOnly-NodeIndication). The indication information may alternatively be other information that can indicate that the terminal type is a terminal performing signaling transmission. This is not limited in this application. The node herein may be understood as the terminal.

The indication information may indicate another terminal type. In this case, the indication information may be, for example, a reduced capability (reduced capability, redcap) node, a reduced capability positioning node, or a low power high accuracy positioning (low power high accuracy positioning, LPHAP) node. This is not limited in this application.

The indication information may alternatively be an information element, a message type, or other information used for indication.

S702: The AMF determines not to establish a session.

The AMF obtains the indication information, and determines that the terminal accesses a network for positioning or signaling transmission, or determines the terminal type. The AMF determines, based on the indication information, not to establish the PDU session. The PDU session is not established, so that signaling overheads may be saved, a delay may be reduced, and a key performance indicator of a service may not be affected.

S703: The AMF sends a NAS message to the terminal via an access network device.

The NAS message is used for responding to the NAS message that carries the indication information.

Specifically, in a terminal registration scenario, the NAS message may be a registration accept (registration accepted) message. In a control plane service request scenario, the NAS message may be a control plane service accept (Service Accept) message. In a service request scenario, the NAS message may be a service accept message.

In an implementation, FIG. 8 is a schematic flowchart of a terminal registering with an AMF. The procedure includes the following steps.

S801: The terminal sends a registration request (registration request) message to the AMF.

The registration request message may include the foregoing indication information. For a meaning of the indication information, refer to the descriptions in step S701.

For example, when the indication information indicates positioning, and the indication information indicates registration for positioning, the indication information may be specifically a first registration type. Alternatively, the indication information may indicate positioning.

For example, when the indication information indicates signaling transmission, and the indication information indicates registration for signaling transmission, the indication information may be specifically a second registration type. Alternatively, the indication information may indicate control-signaling transmission only, control-signaling only, or signaling-only.

For example, when the indication information indicates a terminal type, the indication information may be a positioning node, a signaling node, an LPHAP terminal, a redcap positioning terminal, or the like.

For example, the first registration type or the second registration type may be included in a 5G system registration type (5GS registration type) information element in the registration request message.

Table 1 shows an example of a value of the 5G system registration type information element.

**Table 1**

| | | | |
|---|---|---|---|
| 5^{th} generation system (5^{th} generation system, SGS) registration type value (registration type value) (octet 1, bits 1 to 3) | | | |
| Bits | | | |
| **3** | **2** | **1** | |
| 1 | 1 | 1 | **registration for positioning** |

In Table 1, the 5G system registration type value may be located in bits 1 to 3 of the 1^{st} byte (octet1) of the 5G system registration type information element. "Bits 321" represents a bit sequence of the bits 1 to 3 of the byte.

For example, in Table 1, when the 5G system registration type value is "111", it indicates that a 5G system registration type is registration for positioning. Certainly, more 5G system registration type values may be further added, to indicate that the 5G system registration type is registration for positioning and/or registration for control-signaling transmission.

S802: The AMF determines not to establish a session.

The AMF receives the registration request message, obtains the indication information, and determines not to establish the session. For example, when the indication information indicates positioning or signaling transmission, or when the terminal type indicated by the indication information is a positioning terminal, a terminal performing signaling transmission, or another terminal having no signaling transmission, such as the LPHAP terminal or the redcap positioning terminal, the AMF determines not to establish the session.

S803: The AMF sends a registration accept (registration accepted) message to the terminal.

The registration accept message is used for notifying the terminal that registration is accepted.

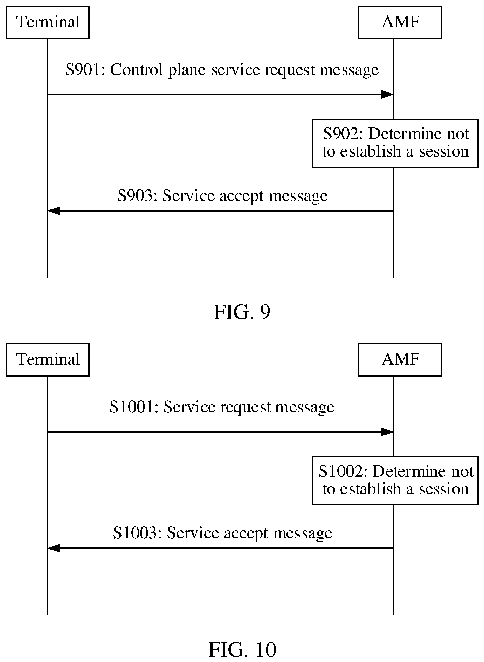

In another implementation, FIG. 9 is a schematic flowchart of a terminal sending a control plane service request to an AMF. The procedure may include the following steps.

S901: The terminal sends a control plane service request (Control Plane Service Request) message to the AMF.

The control plane service request message may include the foregoing indication information. For a meaning of the indication information, refer to the descriptions in step S701.

For example, when the indication information indicates positioning, and the indication information indicates a positioning service, the indication information may be specifically a first control plane service type. Alternatively, the indication information may indicate positioning.

For example, when the indication information indicates signaling transmission, and the indication information indicates a signaling service, the indication information may be specifically a second control plane service type. Alternatively, the indication information may indicate control-signaling transmission only, control-signaling only, or signaling-only.

For example, when the indication information indicates a terminal type, the indication information may be a positioning node, a signaling node, an LPHAP terminal, a redcap positioning terminal, or the like.

For example, the first control plane service type or the second control plane service type may be included in a control plane service type (control plane service type) information element in the control plane service request message.

Table 2 shows an example of a value of the control plane service type information element.

**Table 2**

| | | | |
|---|---|---|---|
| Control plane service type value (octet 1, bit 1 to 3) | | | |
| Bits | | | |
| **3** | **2** | **1** | |
| 1 | 0 | 0 | **positioning service** |

In Table 2, the control plane service type value may be located in bits 1 to 3 of the 1^{st} byte (octet1) of the control plane service type information element. "Bits 321" represents a bit sequence of the bits 1 to 3 of the byte.

For example, in Table 2, when the control plane service type value is "111", it indicates that the control plane service type is a positioning service. Certainly, more control plane service type values may be further added, to indicate that a control plane service type is a positioning service or a signaling service.

S902: The AMF determines not to establish a session.

Specifically, the AMF receives the control plane service request message, obtains the indication information, and determines not to establish the session. For example, when the indication information indicates positioning or signaling transmission, or when the terminal type indicated by the indication information is a positioning terminal, a terminal performing signaling transmission, or another terminal having no signaling transmission, such as the LPHAP terminal or the redcap positioning terminal, the AMF determines not to establish the session.

S903: The AMF sends a control plane service accept (Service Accept) message to the terminal.

The control plane service accept message is used for notifying the terminal that a control plane service is accepted.

In still another implementation, FIG. 10 is a schematic flowchart of a terminal sending a service request to an AMF. The procedure may include the following steps.

S1001: The terminal sends a service request (Service Request) message to the AMF.

The service request message may include the foregoing indication information. For a meaning of the indication information, refer to the descriptions in step S701.

For example, when the indication information indicates positioning, and the indication information indicates a positioning service, the indication information may be specifically a first service type. Alternatively, the indication information may indicate positioning.

For example, when the indication information indicates signaling transmission, and the indication information indicates a signaling service, the indication information may be specifically a second service type. Alternatively, the indication information may indicate control-signaling transmission only, control-signaling only, or signaling-only.

For example, when the indication information indicates a terminal type, the indication information may be a positioning node, a signaling node, an LPHAP terminal, a redcap positioning terminal, or the like.

For example, the first service type or the second service type may be included in a service type (service type) information element in the service request message.

Table 3 shows an example of a value of the service type information element.

**Table 3**

| | | | | |
|---|---|---|---|---|
| Service type value (octet 1) | | | | |
| Service type value | | | | |
| Bits | | | | |
| Service type value (octet 1) | | | | |
| **4** | **3** | **2** | **1** | |
| **1** | **1** | **0** | **0** | **positioning service** |
| All other values are reserved. | | | | |

In Table 3, the service type value may be located in bits 1 to 4 of the 1^{st} byte (octet1) of the service type information element. "Bits 4321" represents a bit sequence of the bits 1 to 4 of the byte.

For example, in Table 3, when the service type value is "111", it indicates that the service type is a positioning service. Certainly, more service type values may be further added, to indicate that a service type is a positioning service or a signaling service.

S1002: The AMF determines not to establish a session.

Specifically, the AMF receives the service request message, obtains the indication information, and determines not to establish the session. For example, when the indication information indicates positioning or signaling transmission, or when the terminal type indicated by the indication information is a positioning terminal, a terminal performing signaling transmission, or another terminal having no signaling transmission, such as the LPHAP terminal or the redcap positioning terminal, the AMF determines not to establish the session.

S1003: The AMF sends a service accept message to the terminal.

The service accept message is used for notifying the terminal that a service is accepted.

According to the communication method provided in this embodiment of this application, after accessing the network, the terminal may notify the AMF that the current access is not for service data transmission, so that the AMF determines not to establish the session for the terminal. Therefore, normal communication is ensured. The method is particularly applicable to a positioning scenario, and may reduce signaling resources, reduce a communication delay, and reduce an effect on a key performance indicator.

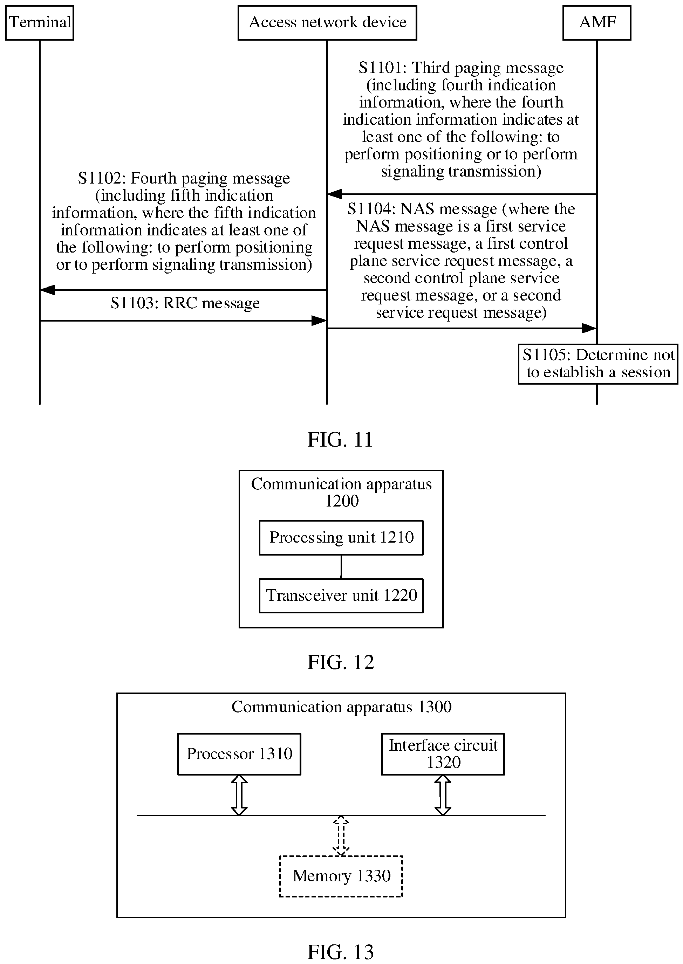

FIG. 11 is a schematic flowchart of yet another communication method according to an embodiment of this application. The method is applied to a paging scenario. The method may include the following steps.

S1101: An AMF sends a third paging message to an access network device.

For specific implementation of this step, refer to step S601. Details are not described herein again.

S1102: After receiving the third paging message, the access network device sends a fourth paging message to a terminal.

For specific implementation of this step, refer to step S602. Details are not described herein again.

S1103: The terminal sends an RRC message to the access network device, where the RRC message is triggered by the fourth paging message.

After receiving the fourth paging message, the terminal sends an RRC setup request message/RRC resume request message, where the message is triggered by the fourth paging message. After receiving the RRC setup request message from the terminal, the access network device sends an RRC setup message/RRC resume message to the terminal. The terminal sends an RRC setup complete message/RRC resume complete message, where the RRC setup complete message/RRC resume complete message includes a NAS message. The NAS message may be a service request message or a control plane service request message.

There are three implementations for the NAS message.

In an implementation, the NAS message is a first service request message, and the first service request message is the same as the service request message in step S1001. Alternatively, the NAS message is a first control plane service request message, and the first control plane service request message is the same as the control plane service request message in step S901.

In another implementation, after receiving the fourth paging message, the terminal determines that the NAS message is a second control plane service request message. The AMF receives the NAS message and may determine not to establish a session.

In still another implementation, after receiving the fourth paging message, the terminal determines that the NAS message is a second service request message. The AMF receives the NAS message and may determine not to establish a session.

S1104: The access network device receives the RRC message, where the RRC message includes the NAS message. The access network device forwards, to the AMF, the NAS message sent by the terminal.

Specifically, the access network device obtains the NAS message in the RRC setup complete message, and forwards the NAS message. The AMF receives the NAS message.

S1105: The AMF receives the NAS message and determines not to establish the session.

If the NAS message is the service request message, the service request message is the same as the service request message in step S1001, and processing of the AMF is the same as that in step S1002. If the NAS message is the first control plane service request message, the control plane service request message is the same as the control plane service request message in step S901, and processing of the AMF is the same as that in step S902.

If the NAS message is the second control plane service request message, the AMF receives the NAS message, and determines not to establish the session.

If the NAS message is the second service request message, the AMF receives the NAS message, and determines not to establish the session.

According to the communication method provided in this embodiment of this application, a network pages the terminal, and the network indicates that the current paging is not for service data transmission, so that the AMF determines not to establish the session for the terminal. In this way, normal communication may be ensured. The method is particularly applicable to a positioning scenario, and reduces signaling resources, reduces a communication delay, and reduces an effect on a key performance indicator.

It may be understood that the foregoing embodiments may be combined into a new embodiment. This is not limited in this application.

It may be understood that, to implement functions in the foregoing embodiments, the terminal, the access network device and the access management function network element include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by the hardware or by the computer software driving the hardware depends on particular applications and design constraints of the technical solutions.

FIG. 12 and FIG. 13 are schematic structural diagrams of possible communication apparatuses according to embodiments of this application. These communication apparatuses may be configured to implement functions of the terminal, the access network device, and the access management function network element in the foregoing method embodiments, and therefore can also implement beneficial effects of the foregoing method embodiments. In embodiments of this application, the communication apparatus may be a terminal, an access network device, or an access management function network element, or may be a module (for example, a chip) used in the terminal, the access network device, or the access management function network element.

As shown in FIG. 12, a communication apparatus 1200 includes a processing unit 1210 and a transceiver unit 1220. The communication apparatus 1200 is configured to implement functions of the terminal, the access network device, or the access management function network element in the method embodiments shown in FIG. 3 to FIG. 11.

When the communication apparatus 1200 is configured to implement functions of the terminal in the method embodiment shown in FIG. 3, the transceiver unit 1220 is configured to perform a sending function in step S301 in the embodiment shown in FIG. 3, namely, sending the indication information to the access network device, where the indication information indicates at least one of the following: positioning, the type of the communication apparatus, or signaling transmission. The transceiver unit 1220 is further configured to perform a receiving function in step S302 in the embodiment shown in FIG. 3, namely, receiving the RRC message from the access network device, where the RRC message is used for configuring an SRB2 for the communication apparatus and not configuring a DRB.

When the communication apparatus 1200 is configured to implement functions of the access network device in the method embodiment shown in FIG. 3, the transceiver unit 1220 is configured to perform a receiving function in step S301 in the embodiment shown in FIG. 3, namely, receiving the indication information from the terminal, where the indication information indicates at least one of the following: positioning, the terminal type, or signaling transmission. The transceiver unit 1220 is further configured to perform a sending function in step S302 in the embodiment shown in FIG. 3, namely, sending the RRC message to the terminal, where the RRC message is used for configuring an SRB2 for the terminal and not configuring a DRB.

In a possible implementation, when the indication information indicates positioning, the indication information includes at least one of the following: positioning, positioning-signaling, a positioning service, or positioning service signaling. In this implementation, the at least one piece of the indication information may clearly indicate positioning, so that processing efficiency of the access network device is improved.

In another possible implementation, when the indication information indicates that the terminal type is a positioning terminal, the indication information includes at least one of the following: a positioning-node indication or a positioning indication. In this implementation, the indication information may clearly indicate that the terminal type is the positioning terminal, so that the access network device may determine that there is no need to establish a DRB for the terminal.

In another possible implementation, when the indication information indicates that the terminal type is a terminal performing signaling transmission, the indication information includes at least one of the following: a signaling node indication or a signaling only-node indication. In this implementation, the indication information may clearly indicate that the terminal type is the terminal performing signaling transmission, so that the access network device may determine that there is no need to establish a DRB for the terminal.

In another possible implementation, when the indication information indicates signaling transmission, the indication information includes at least one of the following: signaling, signaling-only, or control-signaling. In this implementation, the at least one piece of the indication information may clearly indicate signaling transmission, so that the processing efficiency of the access network device is improved.

In another possible implementation, the indication information is included in an RRC setup request message, and the indication information is an establishment cause; the indication information is included in an RRC resume request message, and the indication information is a resume cause; the indication information is included in an RRC setup complete message; or the indication information is included in an RRC resume complete message. In this implementation, the indication information is carried in any one of the foregoing messages, to clearly indicate signaling transmission, so that the processing efficiency of the access network device is improved. In addition, there is no need to separately send the indication information, so that signaling overheads are saved.

For more detailed descriptions of the processing unit 1210 and the transceiver unit 1220, directly refer to related descriptions in the method embodiment shown in FIG. 3. Details are not described herein again.

When the communication apparatus 1200 is configured to implement functions of the terminal in the method embodiment shown in FIG. 6, the transceiver unit 1220 is configured to perform a receiving function in step S602 in the embodiment shown in FIG. 6, namely, receiving the second paging message from the access network device, where the second paging message includes the second indication information, and the second indication information indicates at least one of the following: positioning or signaling transmission. The transceiver unit 1220 is further configured to perform a sending function in step S603 in the embodiment shown in FIG. 6, namely, sending the RRC message to the access network device, where the RRC message is triggered by the second paging message.

When the communication apparatus 1200 is configured to implement functions of the access network device in the method embodiment shown in FIG. 6, the transceiver unit 1220 is configured to perform a receiving function in step S601 in the embodiment shown in FIG. 6, namely, receiving the first paging message from the AMF network element, where the first paging message includes the first indication information, and the first indication information indicates at least one of the following: positioning or signaling transmission. The transceiver unit 1220 is further configured to perform a sending function in step S602 in the embodiment shown in FIG. 6, namely, sending the second paging message to the terminal based on the first paging message. The transceiver unit 1220 is further configured to perform a receiving function in step S603 in the embodiment shown in FIG. 6, namely, receiving the RRC message from the terminal, where the RRC message is triggered by the second paging message.

When the communication apparatus 1200 is configured to implement functions of the access management function network element in the method embodiment shown in FIG. 6, the transceiver unit 1220 is configured to perform a sending function in step S601 in the embodiment shown in FIG. 6, namely, sending the first paging message to the access network device, where the first paging message includes the first indication information, and the first indication information indicates at least one of the following: positioning or signaling transmission. In addition, the transceiver unit 1220 is further configured to perform a receiving function in step S604 in the embodiment shown in FIG. 6, namely, receiving the NAS message from the access network device, where the NAS message is triggered by the first paging message.

For more detailed descriptions of the processing unit 1210 and the transceiver unit 1220, directly refer to related descriptions in the method embodiment shown in FIG. 6. Details are not described herein again.

When the communication apparatus 1200 is configured to implement functions of the terminal in the method embodiment shown in FIG. 7, the transceiver unit 1220 is configured to perform a sending function in step S701 in the embodiment shown in FIG. 7, namely, sending the indication information to the AMF network element, where the indication information indicates at least one of the following: positioning, to perform signaling transmission, or the terminal type. The transceiver unit 1220 is further configured to perform a receiving function in step S703 in the embodiment shown in FIG. 7, namely, receiving the NAS message from the AMF network element.

When the communication apparatus 1200 is configured to implement functions of the access management function network element in the method embodiment shown in FIG. 7, the transceiver unit 1220 is configured to perform a receiving function in step S701 in the embodiment shown in FIG. 7, namely, receiving the indication information from the terminal, where the indication information indicates at least one of the following: positioning, to perform signaling transmission, or the terminal type. The processing unit 1210 is configured to perform a function in step S702 in the embodiment shown in FIG. 7, namely, determining not to establish the session. The transceiver unit 1220 is further configured to perform a sending function in step S703 in the embodiment shown in FIG. 7, namely, sending the NAS message to the terminal.

In a possible implementation, when the indication information indicates positioning, the indication information includes at least one of the following: registration for positioning, positioning, or a positioning service. In this implementation, the at least one piece of the indication information may clearly indicate positioning, so that processing efficiency of the AMF is improved.

In another possible implementation, the indication information is included in a registration request message, and the indication information is a first registration type; or the indication information is included in a control plane service request message, and the indication information is a first control plane service type; or the indication information is included in a service request message, and the indication information is a first service type. In this implementation, the AMF receives the registration request message/control plane service request message/service request message, and obtains a 5G system registration type value in the registration request message. When a registration type/control plane service type/service type is registration or access for positioning, the AMF may clearly determine not to establish a session. Therefore, signaling resources may be reduced, and a communication delay may be reduced.

In another possible implementation, when the indication information indicates signaling transmission, the indication information includes at least one of the following: registration for control-signaling transmission, control-signaling transmission only, control-signaling only, signaling-only, or a signaling service. In this implementation, the at least one piece of the indication information may clearly indicate signaling transmission, so that the processing efficiency of the AMF is improved.

In another possible implementation, the indication information is included in a registration request message, and the indication information is a second registration type; or the indication information is included in a control plane service request message, and the indication information is a second control plane service type; or the indication information is included in a service request message, and the indication information is a second service type. In this implementation, the AMF receives the registration request message/control plane service request message/service request message, obtains a 5G system registration type value/control plane service type value/service type value in the registration request message/control plane service request message/service request message. When a registration type/control plane service type/service type is registration or access for control-signaling transmission, the AMF determines not to establish a session. Therefore, signaling resources may be reduced, and a communication delay may be reduced.

For more detailed descriptions of the processing unit 1210 and the transceiver unit 1220, directly refer to related descriptions in the method embodiment shown in FIG. 7. Details are not described herein again.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, or store input data needed by the processor 1310 to run the instructions, or store data generated after the processor 1310 runs the instructions.

When the communication apparatus 1300 is configured to implement the methods shown in FIG. 3 to FIG. 11, the processor 1310 is configured to implement a function of the processing unit 1210, and the interface circuit 1320 is configured to implement a function of the transceiver unit 1220.

When the communication apparatus is a chip used in a terminal, the terminal chip implements functions of the terminal in the foregoing method embodiments. The terminal chip receives information from another module (for example, a radio frequency module or an antenna) in the terminal, where the information is sent by an access network device to the terminal. Alternatively, the terminal chip sends information to another module (for example, a radio frequency module or an antenna) in the terminal, where the information is sent by the terminal to an access network device.

When the communication apparatus is a chip used in an access network device, the access network device chip implements functions of the access network device in the foregoing method embodiments. The access network device chip receives information from another module (for example, a radio frequency module or an antenna) in the access network device, where the information is sent by a terminal to the access network device. Alternatively, the access network device chip sends information to another module (for example, a radio frequency module or an antenna) in the access network device, where the information is sent by the access network device to a terminal.

It may be understood that the processor in embodiments of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented by hardware, or may be implemented by the processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium, and can write information into the storage medium. Certainly, the storage medium may alternatively be a part of the processor. The processor and the storage medium may be located in the ASIC. In addition, the ASIC may be located in the access network device or the terminal. Certainly, the processor and the storage medium may alternatively exist in the access network device or the terminal as discrete components.

All or some of the foregoing embodiments may be implemented by using the software, the hardware, firmware, or any combination thereof. When the software is used to implement the foregoing embodiments, all or some of the foregoing embodiments may be implemented in a form of a computer program product. The computer program product includes one or more computer programs or instructions. When the computer programs or the instructions are loaded and executed on a computer, all or some of the procedures or functions according to embodiments of this application are performed. The computer may be a general-purpose computer, a dedicated computer, a computer network, an access network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, a computer, a server, or a data center to another website, computer, server, or data center in a wired or wireless manner. The computer-readable storage medium may be any usable medium that can be accessed by the computer, or a data storage device such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, if there is no special description or logical conflict, terms and/or descriptions between different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A communication method, wherein the method comprises:
sending, by a terminal, indication information to an access network device, wherein the indication information indicates at least one of the following: positioning, a terminal type, or signaling transmission; and
receiving, by the terminal, a radio resource control RRC message from the access network device, wherein the RRC message is used for configuring a signaling radio bearer SRB2 for the terminal and not configuring a data radio bearer DRB.

2. A communication method, wherein the method comprises:
receiving, by an access network device, indication information from a terminal, wherein the indication information indicates at least one of the following: positioning, a terminal type, or signaling transmission; and
sending, by the access network device, a radio resource control RRC message to the terminal, wherein the RRC message is used for configuring a signaling radio bearer SRB2 for the terminal and not configuring a data radio bearer DRB.

3. The method according to claim 1 or 2, wherein when the indication information indicates positioning, the indication information comprises at least one of the following: positioning, positioning-signaling, a positioning service, or positioning service signaling.

4. The method according to claim 1 or 2, wherein when the indication information indicates that the terminal type is a positioning terminal, the indication information comprises at least one of the following: a positioning-node indication or a positioning indication.

5. The method according to claim 1 or 2, wherein when the indication information indicates that the terminal type is a terminal performing signaling transmission, the indication information comprises at least one of the following: a signaling node indication or a signaling only-node indication.

6. The method according to claim 1 or 2, wherein when the indication information indicates signaling transmission, the indication information comprises at least one of the following:
signaling, signaling-only, or control-signaling.

7. The method according to any one of claims 1 to 6, wherein the indication information is comprised in an RRC setup request message, and the indication information is an establishment cause;
the indication information is comprised in an RRC resume request message, and the indication information is a resume cause;
the indication information is comprised in an RRC setup complete message; or
the indication information is comprised in an RRC resume complete message.

8. A communication apparatus, wherein the apparatus comprises a transceiver unit, wherein
the transceiver unit is configured to send indication information to an access network device, wherein the indication information indicates at least one of the following: positioning, a type of the communication apparatus, or signaling transmission; and
the transceiver unit is further configured to receive a radio resource control RRC message from the access network device, wherein the RRC message is used for configuring a signaling radio bearer SRB2 for the communication apparatus and not configuring a data radio bearer DRB.

9. A communication apparatus, wherein the apparatus comprises a transceiver unit, wherein
the transceiver unit is configured to receive indication information from a terminal, wherein the indication information indicates at least one of the following: positioning, a terminal type, or signaling transmission; and
the transceiver unit is further configured to send a radio resource control RRC message to the terminal, wherein the RRC message is used for configuring a signaling radio bearer SRB2 for the terminal and not configuring a data radio bearer DRB.

10. The apparatus according to claim 8 or 9, wherein when the indication information indicates positioning, the indication information comprises at least one of the following:
positioning, positioning-signaling, a positioning service, or positioning service signaling.

11. The apparatus according to claim 8 or 9, wherein when the indication information indicates that the terminal type is a positioning terminal, the indication information comprises at least one of the following: a positioning-node indication or a positioning indication.

12. The apparatus according to claim 8 or 9, wherein when the indication information indicates that the terminal type is a terminal performing signaling transmission, the indication information comprises at least one of the following: a signaling node indication or a signaling only-node indication.

13. The apparatus according to claim 8 or 9, wherein when the indication information indicates signaling transmission, the indication information comprises at least one of the following: signaling, signaling-only, or control-signaling.

14. The apparatus according to any one of claims 8 to 13, wherein the indication information is comprised in an RRC setup request message, and the indication information is an establishment cause;
the indication information is comprised in an RRC resume request message, and the indication information is a resume cause;
the indication information is comprised in an RRC setup complete message; or
the indication information is comprised in an RRC resume complete message.

15. A communication apparatus, comprising a processor and an interface circuit, wherein the interface circuit is configured to receive a signal from another apparatus other than the apparatus and transmit the signal to the processor, or send a signal from the processor to another communication apparatus other than the apparatus, and the processor is configured to implement the method according to any one of claim 1 and claims 3 to 7 or the method according to any one of claims 2 to 7 by using a logic circuit or by executing code instructions.

16. A computer-readable storage medium, wherein the storage medium stores a computer program or instructions; and when the computer program is executed or the instructions are executed by a communication apparatus, the method according to any one of claim 1 and claims 3 to 7 or the method according to any one of claims 2 to 7 is implemented.
